# EUROPÄISCHE PATENTSCHRIFT

(11) **EP 2 282 079 B1**
(45) Veröffentlichungstag und Bekanntmachung des Hinweises auf die Patenterteilung: **14.06.2017**
(21) Anmeldenummer: 10169658.1
(22) Anmeldetag: 15.07.2010
(51) Int. Cl.: F16F 15/26, B21K 1/12

(54) **Verfahren zur Herstellung einer Ausgleichswelle**
Method for manufacturing a balancing shaft
Procédé de fabrication d'un arbre d'équilibrage

(30) Priorität: 04.08.2009 DE 102009036067
(43) Veröffentlichungstag der Anmeldung: 09.02.2011
(73) Patentinhaber: Schaeffler Technologies AG & Co. KG, 91074 Herzogenaurach (DE)
(72) Erfinder: Heß, Stefan, 91074 Herzogenaurach (DE); Solfrank, Peter, 96158 Frensdorf (DE); Kern, Alexander, 91056 Erlangen (DE); Ullmann, Patrick, 91074 Herzogenaurach (DE)

(56) Entgegenhaltungen:
- DE-A1-102007 019 008
- DE-A1-102008 008 000
- US-A1- 2007 062 329
- US-B1- 6 199 275

## Beschreibung

### Gebiet der Erfindung

Die Erfindung betrifft ein Verfahren zur Herstellung einer Ausgleichswelle aus einem gesenkgeschmiedeten Wellenrohling. Die Ausgleichswelle weist einen Wellenabschnitt mit einem exzentrisch zur Rotationsachse der Ausgleichswelle verlaufenden Massenschwerpunkt auf, der mit der Rotationsachse eine Unwuchtebene aufspannt, die im wesentlichen orthogonal zur Gesenkteilung verläuft. Der Wellenabschnitt weist einen Grundkörper und eine davon ausgehende Rippe auf, die sich bezüglich der Rotationsachse in die dem Massenschwerpunkt abgewandte Richtung der Unwuchtebene mit einer Höhe H erstreckt.

### Hintergrund der Erfindung

Eine derartige Ausgleichswelle findet Anwendung in Verbrennungsmotoren zum teilweisen oder vollständigen Ausgleich der freien Massenkräfte und/oder Massenmomente. Die radiale Lagerung der Ausgleichswelle erfolgt in zunehmendem Maße mittels reibungsarmer Nadellagerungen, die auf den Lagerzapfen der Ausgleichswelle unmittelbar abwälzen, so dass nadelgelagerte Ausgleichswellen üblicherweise als tribologisch hochbelastbare Schmiedeteile ausgeführt sind. So auch in gattungsgemässen der DE 10 2007 019 008 A1, in der es im Hinblick auf einen homogenen Faserverlauf im Bereich der tribologisch hochbeanspruchten Lastzone des Lagerzapfens vorgeschlagen ist, die Teilung des Schmiedegesenks orthogonal zur Unwuchtebene der Ausgleichswelle auszurichten.

Die Wellenabschnitte, die zwischen und neben den Lagerzapfen verlaufen und an der Unwuchtwirkung der Ausgleichswelle maßgeblich beteiligt sind, weisen versteifende Rippen in Richtung der Unwuchtebene auf, welche aufgrund der dazu orthogonalen Gesenkteilung durch die Hohlform einer der Gesenkhälften geformt werden. Dieser in der Schmiedetechnik als Steigen bezeichnete Werkstofffluss erfolgt entgegen der Hubbewegung der Gesenkhälften und erfordert im Hinblick auf ein vollständiges Ausfüllen der Rippenhohlform, dass auch in Richtung der Gesenkteilung ausreichend viel Werkstoffvolumen vorhanden ist, das unter sehr hohem Druck einerseits in Richtung der Rippenhohlform und andererseits in Richtung der Gratspalte des Gesenks unter Ausbildung der Schmiedegrate gepresst wird. Folglich ist die schmiedbare Höhe der Rippe, d.h. deren Erstreckung in Unwuchtrichtung, durch die sich in Richtung der Gesenkteilung erstreckende Breite des geschmiedeten Wellenrohlings limitiert.

### Aufgabe der Erfindung

Der vorliegenden Erfindung liegt die Aufgabe zugrunde, das Herstellverfahren einer im Gesenk geschmiedeten Ausgleichswelle so zu verbessern, dass die Höhe der Rippe in Bezug auf die Breite des Grundkörpers, von dem die Rippe aufsteigt, maximiert werden kann.

### Zusammenfassung der Erfindung

Erfindungsgemäß wird diese Aufgabe durch die kennzeichnenden Merkmale des Anspruchs 1 gelöst, während vorteilhafte Weiterbildungen und Ausgestaltungen der Erfindung den Unteransprüchen entnehmbar sind. Demnach ist folgender Verfahrensschritt vorgesehen: Abtrennen der im Gesenk ausgebildeten Schmiedegrate durch Beschneiden des geschmiedeten Wellenrohlings zur endkonturnahen Form des Grundkörpers an Beschneidstellen, die im Querschnitt des Wellenrohlings beidseits der Rippe verlaufen und deren Abstand S2 zueinander wesentlich kleiner als der Abstand S1 der Schmiedegrate zueinander vor dem Abtrennen ist.

Mit anderen Worten beschränkt sich das Abgraten des geschmiedeten Wellenrohlings nicht, wie bisher üblich, auf das Abtrennen der dünnwandigen Schmiedegrate, sondern erfolgt im dickwandigen Bereich des Grundkörpers, so dass im wesentlichen parallel zur Unwuchtebene verlaufende Schnittkanten mit vergleichsweise großer Schnittoberfläche entstehen. Der auf diese Weise geschaffene Freiheitsgrad erlaubt es, die sich in Richtung der Gesenkteilung erstreckende Breite der Gesenkhohlformen mit der auszufüllenden Höhe der Rippenhohlform bedarfsweise zu vergrößern, da das dort nicht benötigte Material nach dem Schmieden dickwandig und vorzugsweise spanlos abgetrennt wird. Die Dicke D der Schnittkanten, d.h. die zu durchtrennende Materialstärke ist bevorzugt mindestens halb so groß wie der Abstand S2 der Beschneidstellen: D:S2>0,5.

In bevorzugter Weiterbildung der Erfindung ist es vorgesehen, dass für den Abstand S1 der Schmiedegrate, den Abstand S2 der Beschneidstellen und die Höhe H der Rippe folgende Verhältnisse eingestellt werden: S2:S1<0,5 und S1:H>2, bevorzugt >3. Anders ausgedrückt: der Grundkörper soll nach dem Beschneiden höchstens halb so breit wie der geschmiedete Wellenrohling sein, wenn dieser lediglich abgegratet wäre, und die Gesenkhohlformen sollen abzüglich der Gratstege mindestens zweimal, vorzugsweise mindestens dreimal so breit wie die Rippenhohlform sein.

Im Hinblick auf einen möglichst kraftarmen Beschneidvorgang ist es schließlich vorgesehen, dass das Beschneiden im noch warmen Zustand des Wellenrohlings, d.h. in kurzem zeitlichen Abstand zum Schmieden erfolgt.

### Kurze Beschreibung der Zeichnungen

Weitere Merkmale der Erfindung ergeben sich aus der nachfolgenden Beschreibung und aus den Zeichnungen, in denen ein Ausführungsbeispiel der Erfindung dargestellt ist. Es zeigen teilweise vereinfacht oder schematisch:
- Figur 1: ein Gesenk mit fertig geschmiedetem Wellenrohling im Querschnitt;
- Figur 2: das Untergesenk gemäß Figur 1;
- Figur 3: den Querschnitt des geschmiedeten Wellenrohlings nach dem Beschneiden und
- Figur 4: eine nach dem erfindungsgemäßen Verfahren hergestellte Ausgleichswelle in perspektivischer Darstellung.

### Ausführliche Beschreibung der Zeichnungen

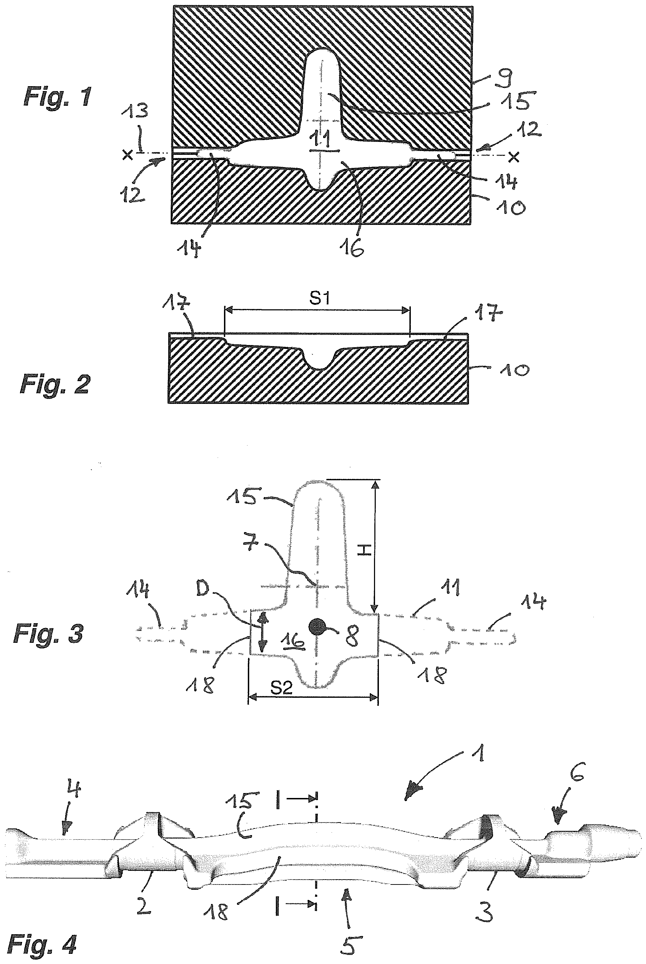

Figur 4 zeigt eine nach dem erfindungsgemäßen Verfahren hergestellte Ausgleichswelle 1 im fertig bearbeiteten Zustand. Die Ausgleichswelle 1 bildet Teil eines Massenausgleichsgetriebes, das zum Ausgleich der freien Massenkräfte zweiter Ordnung einer Brennkraftmaschine in Vierzylinder-Reihenbauweise dient. Das Massenausgleichsgetriebe umfasst in diesem Fall zwei derartige Ausgleichswellen 1, die mit doppelter Kurbelwellendrehzahl gegensinnig rotieren. Zum Antrieb der Ausgleichswelle 1 erforderliche Anbauteile, wie beispielsweise ein Ketten- oder Zahnrad fehlen zwecks vereinfachter Darstellung.

Die geschmiedete Ausgleichswelle 1 weist zwei im Querschnitt kreisförmige Lagerzapfen 2 und 3 auf, die spanend nachbearbeitet und induktiv gehärtet sind und jeweils als Innenlaufbahn für die Nadelrollen eines Nadellagers dienen, mittels denen die Ausgleichswelle 1 in der Brennkraftmaschine radial wälzgelagert ist. Beidseits der Lagerzapfen 2, 3 verlaufende Wellenabschnitte 4 bis 6 sind funktionsbedingt als Unwuchtabschnitte ausgebildet, so dass die Ausgleichswelle 1 einen zu deren Rotationsachse 7 exzentrischen und die Unwucht erzeugenden Massenschwerpunkt 8 aufweist, der mit der Rotationsachse 7 eine Unwuchtebene aufspannt (siehe Figur 3). Ein Teil der Unwuchtwirkung wird auch durch die Geometrie der beiden Lagerzapfen 2, 3 erzeugt, indem diese eine in Umfangsrichtung veränderliche und an die sogenannte Punktbelastung der Innenlaufbahn angepasste Breite aufweisen. Diese Gestaltung der Lagerzapfen 2, 3 ist aus der EP 1 775 484 A2 an sich bekannt und hier nur insoweit erläutert, als die Lagerzapfen 2, 3 bei Rotation der Ausgleichswelle 1 mit der mitrotierenden Unwucht beaufschlagt werden, so dass sich auf jeder Innenlaufbahn eine quasistationäre, d.h. relativ zur rotierenden Innenlaufbahn stillstehende Lastzone ausbildet. Diese Lastzone verläuft innerhalb des breiteren Teilumfangs der Lagerzapfen 2, 3 seitens des Massenschwerpunkts 8 und im wesentlichen symmetrisch zur Unwuchtebene. Die geringe Belastung außerhalb der Lastzone erlaubt es, die Innenlaufbahnen außerhalb der Lastzone deutlich zu verjüngen.

In Figur 1 ist der dem Schnitt I-I in Figur 4 entsprechende Querschnitt durch ein Gesenk 9, 10 mit darin fertig geschmiedetem Wellenrohling 11 schematisch dargestellt; Figur 2 zeigt das Untergesenk 10. Es handelt sich um ein sogenanntes Gratgesenk, bei dem ein Teil des umgeformten Werkstoffs des Wellenrohlings 11 über querschnittsarme Gratspalte 12 im Bereich der strichpunktiert dargestellten Gesenkteilung 13 aus den Hohlformen des Obergesenks 9 und des Untergesenks 10 unter Bildung der nachfolgend abzutrennenden Schmiedegrate 14 nach außen verdrängt wird. Dies begünstigt die vollständige Füllung des Gesenks 9, 10 und insbesondere der Rippenhohlform im Obergesenk 9, in welcher eine die schnell rotierende Ausgleichswelle 1 versteifende Rippe 15 geformt wird. Die Rippe 15 geht von einem Grundkörper 16 des Wellenabschnitts 5 aus und erstreckt sich bezüglich der Rotationsachse 7 der Ausgleichswelle 1 in die dem Massenschwerpunkt 8 abgewandte Richtung der Unwuchtebene mit einer Höhe H (siehe Figur 3). Die Gesenkteilung 13 verläuft orthogonal dazu innerhalb des Grundkörpers 16.

Wie bereits eingangs erwähnt, erfordert das sogenannte Steigen des Werkstoffs in die Rippenhohlform eine Werkstoffverteilung im Gesenk 9, 10 derart, dass sich ausreichend viel druckbeaufschlagtes Werkstoffvolumen in Richtung der Gesenkteilung 13 erstreckt. Dies wird vorliegend dadurch erreicht, dass die geschmiedete Breite des Wellenrohlings 11, d.h. der gegenseitige Abstand S1 der Schmiedegrate 14 mindestens dreimal so groß wie die Höhe H der Rippe 15 ist (die sich zwischen den Gratstegen 17 ausbildenden Schmiedegrate 14 sind im Maß S1 nicht enthalten).

Wie in den Figuren 3 und 4 erkennbar, ist diese ursprünglich geschmiedete Breite S1 am Wellenabschnitt 5 der fertig bearbeiteten Ausgleichswelle 1 nicht mehr vorhanden. Vielmehr erfolgt das Abtrennen der Schmiedegrate 14 (mit einem nicht dargestellten Trennwerkzeug) an beidseits der Unwuchtebene verlaufenden Beschneidstellen, deren Abstand S2 deutlich kleiner als der Abstand S1 der Schmiedegrate 14 vor dem Abtrennen ist (siehe gepunktete Linie in Figur 3). Durch das vorliegend 0,5 betragende Verhältnis S2:S1 erfolgt das Beschneiden des geschmiedeten Wellenrohlings 11 im dickwandigen Bereich des Grundkörpers 16 und erzeugt die in Figur 4 deutlich erkennbaren, breiten Schnittflächen 18. Deren Dicke D (in Richtung der Unwuchtebene gemessen) beträgt bei der augeführten Ausgleichswelle 1 etwa 8mm bei S2=14mm, so dass sich ein Verhältnis D:S2 von 0,57 ergibt.

Der Vorgang des spanlosen und an beiden Beschneidstellen gleichzeitig erfolgenden Beschneidens des Wellenrohlings 11 schließt zeitnah an den Schmiedeprozess an, so dass die Werkzeugschnittkräfte aufgrund des noch erhitzten Wellenrohlings 11 minimiert werden können. Eine spanende Nacharbeit der Schnittflächen 18 ist nicht vorgesehen.

### Bezugszahlenliste

- 1: Ausgleichswelle
- 2: Lagerzapfen
- 3: Lagerzapfen
- 4: Wellenabschnitt
- 5: Wellenabschnitt
- 6: Wellenabschnitt
- 7: Rotationsachse
- 8: Massenschwerpunkt
- 9: Obergesenk
- 10: Untergesenk
- 11: Wellenrohling
- 12: Gratspalt
- 13: Gesenkteilung
- 14: Schmiedegrat
- 15: Rippe
- 16: Grundkörper
- 17: Gratsteg
- 18: Schnittfläche
- S1: Innenabstand zwischen den Schmiedegraten
- S2: Abstand der Beschneidstellen
- H: Höhe der Rippe
- D: Dicke der Schnittfläche

## Patentansprüche

1. Verfahren zur Herstellung einer Ausgleichswelle (1) aus einem gesenkgeschmiedeten Wellenrohling (11), welche Ausgleichswelle (1) einen Wellenabschnitt (5) mit einem exzentrisch zur Rotationsachse (7) der Ausgleichswelle (1) verlaufenden Massenschwerpunkt (8) aufweist, der mit der Rotationsachse (7) eine Unwuchtebene aufspannt, die im wesentlichen orthogonal zur Gesenkteilung (13) verläuft, wobei der Wellenabschnitt (5) einen Grundkörper (16) und eine davon ausgehende Rippe (15) aufweist, die sich bezüglich der Rotationsachse (7) in die dem Massenschwerpunkt (8) abgewandte Richtung der Unwuchtebene mit einer Höhe H erstreckt, **gekennzeichnet durch** folgenden Verfahrensschritt:
▪ Abtrennen der im Gesenk (9, 10) ausgebildeten Schmiedegrate (14) durch Beschneiden des geschmiedeten Wellenrohlings (11) zur endkonturnahen Form des Grundkörpers (16) an Beschneidstellen, die im Querschnitt des Wellenrohlings (11) beidseits der Rippe (15) verlaufen und deren Abstand S2 zueinander wesentlich kleiner als der Abstand S1 der Schmiedegrate (14) zueinander vor dem Abtrennen ist.

2. Verfahren nach Anspruch 1, **dadurch gekennzeichnet, dass** für den Abstand S1 der Schmiedegrate (14), den Abstand S2 der Beschneidstellen und die Höhe H der Rippe (15) folgende Verhältnisse eingestellt werden: S2:S1<0,5 und S1:H>2.

3. Verfahren nach Anspruch 2, **dadurch gekennzeichnet, dass** S1:H>3 ist.

4. Verfahren nach Anspruch 1, **dadurch gekennzeichnet, dass** für die in Richtung der Unwuchtebene gemessene Dicke D des Grundkörpers (16) an den Beschneidstellen folgendes Verhältnis gilt: D:S2>0,5

5. Verfahren nach Anspruch 1, **dadurch gekennzeichnet, dass** das Beschneiden im warmen Zustand des Wellenrohlings (11) in kurzem zeitlichen Abstand zum Schmieden erfolgt.

## Claims

1. Method for producing a balancing shaft (1) from a die-forged shaft blank (11), which balancing shaft (1) has a shaft section (5) with a centre of mass (8) which runs eccentrically with respect to the rotational axis (7) of the balancing shaft (1) and defines an unbalance plane with the rotational axis (7), which unbalance plane runs substantially orthogonally with respect to the die partition (13), the shaft section (5) having a main body (16) and a rib (15) which emanates from the latter and extends with regard to the rotational axis (7) in that direction of the unbalance plane which faces away from the centre of mass (8) at a height H, **characterized by** the following method step:
• severing of the flashes (14) which are formed in the die (9, 10) by way of cutting of the forged shaft blank (11) to produce that shape of the main body (16) which is close to the final contour at cutting points which run on both sides of the rib (15) in the cross section of the shaft blank (11) and the spacing S2 of which from one another is substantially smaller than the spacing S1 of the flashes (14) from one another before the severing operation.

2. Method according to Claim 1, **characterized in that** the following ratios are set for the spacing S1 of the flashes (14), the spacing S2 of the cutting points and the height H of the rib (15): S2:S1 < 0.5 and S1:H > 2.

3. Method according to Claim 2, **characterized in that** S1:H > 3.

4. Method according to Claim 1, **characterized in that** the following ratio applies for the thickness D (measured in the direction of the unbalance plane) of the main body (16) at the cutting points: D:S2 > 0.5.

5. Method according to Claim 1, **characterized in that** the cutting operation takes place in the warm state of the shaft blank (11) at a short time interval from the forging operation.

## Revendications

1. Procédé de fabrication d'un arbre d'équilibrage (1) constitué d'une ébauche d'arbre forgée estampée (11), lequel arbre d'équilibrage (1) présente une portion d'arbre (5) avec un centre de gravité de masse (8) s'étendant de manière excentrique par rapport à l'axe de rotation (7) de l'arbre d'équilibrage (1), qui définit avec l'axe de rotation (7) un plan de déséquilibre qui s'étend essentiellement perpendiculairement à la division de la matrice (13), la portion d'arbre (5) présentant un corps de base (16) et une nervure (15) partant de celui-ci, qui s'étend sur une hauteur H par rapport à l'axe de rotation (7) dans la direction du plan de déséquilibre opposée au centre de gravité de masse (8), **caractérisé par** l'étape de procédé suivante :
- sectionnement des bavures de forgeage (14) réalisées dans la matrice (9, 10) par découpe de l'ébauche d'arbre forgée (11) à la forme proche du contour final du corps de base (16) au niveau de points de découpage qui s'étendent, en section transversale de l'ébauche d'arbre (11) de chaque côté de la nervure (15) et dont l'espacement S2 l'un de l'autre est considérablement plus petit que la distance S1 des bavures de forgeable (14) l'une de l'autre avant le sectionnement.

2. Procédé selon la revendication 1, **caractérisé en ce que** pour la distance S1 des bavures de forgeage (14), la distance S2 des points de découpage et la hauteur H de la nervure (15), on ajuste les rapports suivants :
S2:S1 < 0,5 et S1:H > 2.

3. Procédé selon la revendication 2, **caractérisé en ce que** S1:H > 3.

4. Procédé selon la revendication 1, **caractérisé en ce que** pour l'épaisseur D du corps de base (16) mesurée dans la direction du plan de déséquilibre au niveau des points de découpage, on a le rapport suivant : D:S2 > 0,5.

5. Procédé selon la revendication 1, **caractérisé en ce que** le découpage à l'état chaud de l'ébauche d'arbre (11) a lieu à peu d'intervalle de temps du forgeage.
